# FASCICULE DE BREVET EUROPEEN

(11) **EP 3 787 955 B1**
(45) Date de publication et mention de la délivrance du brevet: **15.06.2022**
(21) Numéro de dépôt: 19783087.0
(22) Date de dépôt: 16.04.2019
(51) Int. Cl.: B62D 21/11

(54) **DISPOSITIF DE SUPPORT D'UNE MACHINE ÉLECTRIQUE MOTRICE DE VÉHICULE, RÉGLABLE EN FONCTION DES BESOINS**
STÜTZVORRICHTUNG, FÜR EINE ELEKTRISCHE ANTRIEBSMASCHINE EINES FAHRZEUGS, DIE NACH BEDARF STEUERBAR IST
SUPPORT DEVICE, FOR AN ELECTRIC PRIME MOVER OF A VEHICLE AND CONTROLLABLE ACCORDING TO REQUIREMENTS

(30) Priorité: 03.05.2018 FR 1853805
(43) Date de publication de la demande: 10.03.2021
(73) Titulaire: PSA Automobiles SA, 78300 Poissy (FR)
(72) Inventeur: DELAND HUY, Eric, 78280 GUYANCOURT (FR)
(86) Numéro de dépôt international: PCT/FR2019/050903
(87) Numéro de publication internationale: WO 2019/211543

(56) Documents cités:
- WO-A1-2016/184607
- WO-A2-2010/125267
- FR-A1- 2 984 838
- JP-A- 2004 291 776

## Description

L'invention concerne les dispositifs de support qui sont destinés à supporter au moins une partie d'une machine électrique motrice d'un véhicule à groupe motopropulseur (ou GMP) tout électrique ou hybride (c'est-à-dire à machine(s) électrique(s) motrice(s) et moteur(s) thermique(s)).

Dans les véhicules à GMP tout électrique ou hybride, généralement de type automobile, il arrive fréquemment qu'au moins une partie de la (ou d'une) machine électrique motrice soit solidarisée fixement à la structure (parfois appelée « caisse » ou « plateforme »), généralement dans une partie arrière, via un dispositif de support. Comme cela est notamment décrit dans le document brevet KR 101807203, ce dispositif de support comprend à cet effet un cadre, généralement constitué de tubes métalliques solidarisés fixement les uns aux autres, et destiné à être solidarisé fixement à la structure du véhicule via M cales élastiques, avec M ≥ 3, et à supporter au moins une partie de la machine électrique motrice via N chapes de fixation, avec N ≥ 2, généralement avec interposition de N cales élastiques. Cette partie supportée de la machine électrique motrice est généralement un motoréducteur. Le document WO 2016/184607 A1 montre les caractéristiques du préambule de la revendication 1.

Actuellement, chaque fois que l'on conçoit une nouvelle structure (ou plateforme) de véhicule et/ou que l'on conçoit une nouvelle machine électrique motrice présentant une nouvelle forme, on est contraint de concevoir un nouveau cadre adapté à cette nouvelle structure et/ou cette nouvelle forme, du fait que l'une au moins des M cales élastiques de la nouvelle structure présente une nouvelle position et/ou que l'une au moins des N cales élastiques de la nouvelle machine électrique motrice présente une nouvelle position. On comprendra que chaque conception d'un nouveau cadre adapté aux nouveaux besoins mobilise des ressources humaines et nécessite la réalisation de maquettes, ce qui induit un nouveau coût.

L'invention a donc notamment pour but d'améliorer la situation.

Elle propose notamment à cet effet un dispositif de support, dédié au support d'au moins une partie d'une machine électrique motrice d'un véhicule comprenant une structure, et comprenant un cadre destiné à être solidarisé fixement à cette structure du véhicule via M cales élastiques, avec M ≥ 3, et à supporter au moins cette partie de la machine électrique motrice via N chapes de fixation, avec N ≥ 2.

Ce dispositif de support se caractérise par le fait qu'il comprend également :
- M pièces d'interface solidarisées fixement au cadre dans des positions respectives réglables en fonction de la structure du véhicule et destinées à être couplées respectivement aux M cales élastiques, et
- N pièces d'ancrage solidarisées fixement au cadre et auxquelles sont solidarisées respectivement les chapes de fixation dans des positions respectives réglables en fonction de cette partie de la machine électrique motrice.

Ces possibilités de réglages des positions respectives des M pièces d'interface et N chapes de fixation par rapport au cadre confère ainsi au dispositif de support une adaptabilité à différentes structures (ou plateformes) de véhicule et à des machines électriques motrices présentant différentes formes, selon les besoins.

Le dispositif de support selon l'invention peut comporter d'autres caractéristiques qui peuvent être prises séparément ou en combinaison, et notamment :
- au moins deux des pièces d'interface peuvent être solidarisées fixement au cadre par vissage ;
- au moins deux des pièces d'interface peuvent être solidarisées fixement au cadre par soudage ;
- chacune des pièces d'interface peut comprendre un insert auquel est propre à être couplée par emmanchement l'une des M cales élastiques ;
- M peut être égal à quatre ;
   > deux des pièces d'interface peuvent avoir des positions qui sont réglables selon une direction transversale du véhicule, et deux autres des pièces d'interface peuvent avoir des positions qui sont réglables selon une direction longitudinale du véhicule et/ou la direction transversale du véhicule ;
- N peut être égal à trois ;
   > deux des chapes de fixation peuvent avoir des positions qui sont réglables par rapport à deux pièces d'ancrage selon une direction transversale du véhicule, et une autre des chapes de fixation peut avoir une position réglable par rapport à une autre pièce d'ancrage selon une direction longitudinale du véhicule.

L'invention propose également un véhicule, éventuellement de type automobile, et comprenant une structure, une machine électrique motrice, et un dispositif de support du type de celui présenté ci-avant, solidarisé fixement à cette structure et auquel est solidarisée fixement au moins une partie de cette machine électrique motrice.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, un exemple de réalisation d'un dispositif de support selon l'invention auquel est solidarisée une partie d'une machine électrique motrice d'un véhicule, et
- la figure 2 illustre schématiquement, dans une vue en perspective, le dispositif de support de la figure 1, avant solidarisation de la partie de la machine électrique motrice.

L'invention a notamment pour but de proposer un dispositif de support DS pouvant être réglé en fonction des besoins afin de supporter différentes parties PM de machines électriques motrices de véhicules à groupe motopropulseur (ou GMP) tout électrique ou hybride et/ou d'être solidarisable à différentes structures (ou plateformes ou caisses) de tels véhicules.

Dans ce qui suit, on considère, à titre d'exemple non limitatif, que le véhicule est de type automobile. Il s'agit par exemple d'une voiture. Mais, l'invention n'est pas limitée à ce type de véhicule. Elle concerne en effet tout type de véhicule terrestre, maritime ou fluvial, ou aérien, et comportant au moins une machine électrique motrice devant être solidarisée indirectement à sa structure.

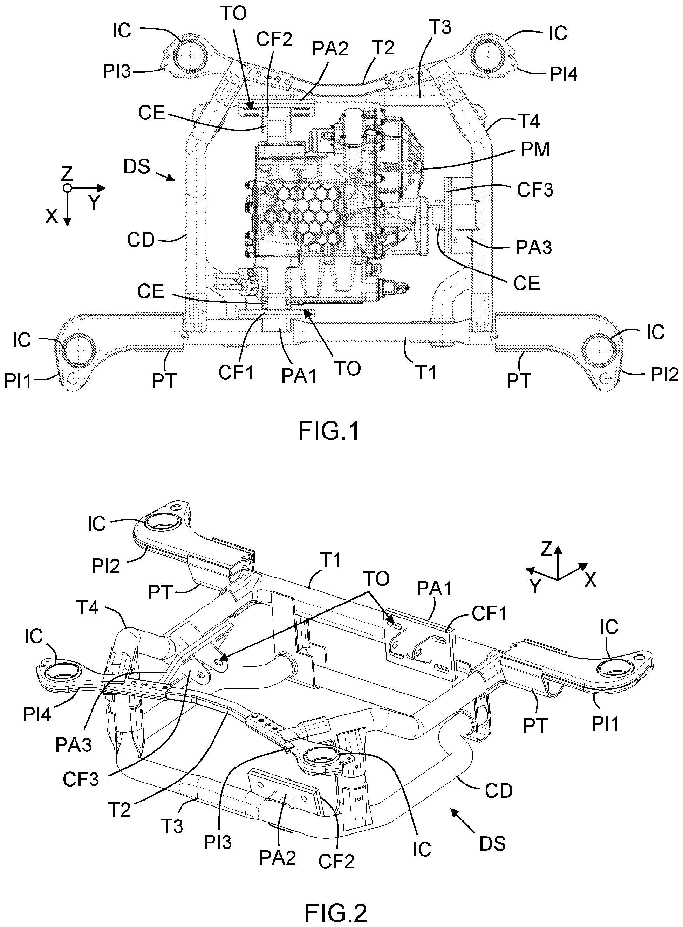

Sur les figures 1 et 2, la direction X est une direction dite longitudinale du véhicule, laquelle est parallèle aux côtés latéraux de ce dernier, la direction Y est une direction dite transversale du véhicule, laquelle est perpendiculaire à la direction X, et la direction Z est une direction dite verticale, laquelle est perpendiculaire aux directions longitudinale X et transversale Y.

On a schématiquement représenté sur la figure 1 un exemple de réalisation d'un dispositif de support DS selon l'invention auquel est solidarisée une partie PM d'une machine électrique motrice d'un véhicule (ici de type automobile).

La partie PM de la machine électrique motrice qui est ici représentée est un motoréducteur.

On considère dans ce qui suit, à titre d'exemple non limitatif, que la partie PM de la machine électrique motrice est destinée à être solidarisée à une partie arrière d'une structure (ou plateforme ou caisse) de véhicule (par exemple à GMP tout électrique).

Comme illustré sur les figures 1 et 2, un dispositif de support DS, selon l'invention, comprend un cadre CD, M pièces d'interface Plm, avec m = 1 à M et M ≥ 3, N pièces d'ancrage PAn, avec n = 1 à N et N ≥ 2, et N chapes de fixation CFn.

Le cadre CD est destiné à être solidarisé fixement à la structure d'un véhicule via M cales élastiques, et à supporter au moins une partie PM d'une machine électrique motrice, via les N chapes de fixation CFn.

Les M cales élastiques (non illustrées) sont solidarisées fixement à la structure du véhicule. Il s'agit par exemple de pièces en caoutchouc, éventuellement synthétique.

Le cadre CD peut, comme illustré non limitativement sur les figures 1 et 2, comprendre un ensemble de tubes métalliques, parmi lesquels se trouvent un tube avant supérieur T1, un tube arrière supérieur T2, un tube arrière inférieur T3, et un tube latéral supérieur T4, sur lesquels on reviendra plus loin. Ces tubes métalliques peuvent, par exemple, être solidarisés fixement les uns aux autres par soudage ou vissage, éventuellement par des brides ou pattes de liaison métalliques.

Les M pièces d'interface Plm sont solidarisées fixement au cadre CD dans des positions respectives qui sont réglables en fonction de la structure du véhicule, et sont destinées à être couplées respectivement aux M cales élastiques (solidarisées fixement à cette structure).

On notera que dans l'exemple illustré non limitativement sur les figures 1 et 2, M est égal à quatre (4). Mais M peut prendre n'importe quelle valeur supérieure ou égale à trois (3).

On notera également que dans l'exemple illustré non limitativement sur les figures 1 et 2, deux premières pièces d'interface PI1 (m = 1) ont des positions qui sont réglables selon la direction transversale Y du véhicule, et deux autres secondes pièces d'interface PI2 (m = 2) ont des positions qui sont réglables selon la direction longitudinale X du véhicule et la direction transversale Y du véhicule. A cet effet, les deux premières pièces d'interface PI1 sont ici solidarisées de façon réglable aux deux extrémités opposées du tube avant T1 qui est sensiblement rectiligne et parallèle à la direction transversale Y, et les deux secondes pièces d'interface PI2 sont ici solidarisées de façon réglable aux deux extrémités opposées du tube arrière supérieur T2 qui est incurvé dans le plan XY. Par exemple, les deux premières pièces d'interface PI1 peuvent être destinées à être couplées aux deux longerons (longitudinaux) de la structure d'un véhicule, via deux cales élastiques, et les deux secondes pièces d'interface PI2 peuvent être destinées à être couplées à une traverse d'assise(s) ou à un « talon » de la structure d'un véhicule, via deux autres cales élastiques.

Mais dans des variantes de réalisation, les deux secondes pièces d'interface PI2 pourraient avoir des positions réglables seulement selon la direction longitudinale X du véhicule ou bien seulement selon la direction transversale Y du véhicule.

Les M pièces d'interface Plm sont de préférence réalisées en métal. Par exemple, chacune d'entre elles peut être réalisée à partir de tôles pliées et assemblées par soudage, comme cela apparaît mieux sur la figure 2.

Les N pièces d'ancrage PAn sont solidarisées fixement au cadre CD. De plus, les N chapes de fixation CFn sont solidarisées respectivement aux N pièces d'ancrage PAn dans des positions respectives qui sont réglables en fonction de la partie PM.

Chaque pièce d'ancrage PAn peut être solidarisée fixement à un tube du cadre CD par soudage ou vissage (de préférence par au moins deux vis).

Par ailleurs, chaque chape de fixation CFn peut être solidarisée fixement à la pièce d'ancrage PAn correspondante par soudage ou vissage. Chaque vissage d'une chape de fixation CFn peut alors se faire, comme illustré non limitativement, au moyen d'au moins deux vis (et de préférence au moins trois, par exemple quatre) qui traversent des trous oblongs TO qu'elle (CFn) comprend et des trous correspondants (éventuellement filetés et/ou éventuellement oblongs) définis dans la pièce d'ancrage PAn correspondante. Les trous oblongs TO (éventuellement filetés) de chaque chape de fixation CFn peuvent, par exemple, avoir leur grand côté qui s'étend suivant une ligne parallèle à la direction transversale Y (ici dans le cas de CF1 et CF2) ou longitudinale X (ici dans le cas de CF3). De même, lorsque les trous de chaque pièce d'ancrage PAn sont oblongs, ils peuvent, par exemple, avoir leur grand côté qui s'étend suivant une ligne parallèle à la direction transversale Y (ici dans le cas de PA1 et PA2) ou longitudinale X (ici dans le cas de PA3).

En variante, chaque vissage d'une chape de fixation CFn peut se faire au moyen d'au moins deux vis qui traversent des trous qu'elle (CFn) comprend et des trous sélectionnés en fonction des besoins parmi plusieurs trous (éventuellement filetés) de la pièce d'ancrage PAn correspondante et éventuellement filetés. Les différents trous (éventuellement filetés) de chaque pièce d'ancrage PAn peuvent, par exemple, être placés les uns à la suite des autres suivant au moins une ligne parallèle à la direction transversale Y (ici dans le cas de PA1 et PA2) ou longitudinale X (ici dans le cas de PA3).

Grâce à cette possibilité de réglage des positions respectives des M pièces d'interface Plm par rapport à un unique cadre CD (« universel ») et à cette possibilité de réglage des positions respectives des N chapes de fixation CFn par rapport à ce cadre CD, le dispositif de support DS est très avantageusement adaptable à différentes structures (ou plateformes ou caisses) de véhicule et à des machines électriques motrices présentant différentes formes, selon les besoins. En d'autres termes, chaque fois qu'une nouvelle structure (ou plateforme ou caisse) de véhicule est conçue et/ou qu'une nouvelle machine électrique motrice est conçue, on définit un dispositif de support avec un cadre universel CD auquel sont solidarisées les M pièces d'interface Plm et les N chapes de fixation CFn en des positions respectives qui sont fonction des positions des M cales électriques de la structure et des N cales électriques CE de la partie PM de la machine électrique motrice. On n'a donc désormais plus besoin de concevoir à chaque fois un nouveau cadre, ce qui évite d'avoir à mobiliser des ressources humaines et à réaliser des maquettes, et donc induit une économie.

On notera que dans l'exemple illustré non limitativement sur les figures 1 et 2, N est égal à trois (3). Mais N peut prendre n'importe quelle valeur supérieure ou égale à deux (2).

On notera également que dans l'exemple illustré non limitativement sur les figures 1 et 2, deux chapes de fixation CF1 (n = 1) et CF2 (n = 2) ont des positions qui sont réglables par rapport à deux pièces d'ancrage PA1 et PA2 selon la direction transversale Y du véhicule, et une autre chape de fixation CF3 (n = 3) a une position qui est réglable par rapport à une autre pièce d'ancrage PA3 selon la direction longitudinale X du véhicule. A cet effet, la pièce d'ancrage PA1 est ici solidarisée fixement (de façon non réglable) au tube avant supérieur T1 qui est sensiblement rectiligne et parallèle à la direction transversale Y, la pièce d'ancrage PA2 est ici solidarisée fixement (de façon non réglable) à une partie du tube arrière inférieur T3 qui est sensiblement rectiligne et parallèle à la direction transversale Y, et la pièce d'ancrage PA3 est ici solidarisée fixement (de façon non réglable) au tube latéral supérieur T4 qui est sensiblement rectiligne et parallèle à la direction longitudinale X. La position de la chape de fixation CF1 est donc ici réglable par rapport à la pièce d'ancrage PA1 et donc par rapport à la direction transversale Y, la position de la chape de fixation CF2 est ici réglable par rapport à la pièce d'ancrage PA2 et donc par rapport à la direction transversale Y, et la position de la chape de fixation CF3 est ici réglable par rapport à la pièce d'ancrage PA3 et donc par rapport à la direction longitudinale X.

On notera également qu'au moins deux des pièces d'interface Plm peuvent être solidarisées fixement au cadre CD par vissage. C'est ainsi le cas des deux secondes pièces d'interface PI2 (m = 2) dans l'exemple illustré non limitativement sur les figures 1 et 2. Chaque vissage peut se faire au moyen d'une vis qui traverse un trou sélectionné en fonction des besoins parmi plusieurs trous (éventuellement filetés) de la pièce d'interface Plm et un unique trou défini dans un tube du cadre CD (ici T2) et éventuellement fileté.

On notera également qu'au moins deux des pièces d'interface Plm peuvent être solidarisées fixement au cadre CD par soudage. C'est ainsi le cas des deux premières pièces d'interface PI1 (m = 1) dans l'exemple illustré non limitativement sur les figures 1 et 2. Afin de faciliter le soudage, les extrémités du tube de cadre CD concerné (ici T1) peuvent, comme illustré non limitativement, comporter des platines (ou manchons) PT (éventuellement rapporté(e)s par soudage ou vissage) destiné(e)s à recevoir les premières pièces d'interface PI1 et comportant éventuellement plusieurs marques définissant plusieurs positions prédéfinies.

Dans des variantes de réalisation, toutes les pièces d'interface Plm pourraient être solidarisées fixement au cadre CD par vissage ou bien par soudage.

On notera également, comme illustré non limitativement sur les figures 1 et 2, que chacune des pièces d'interface Plm peut comprendre un insert IC auquel est propre à être couplée par emmanchement l'une des cales élastiques de la structure du véhicule. Chaque insert IC peut, par exemple, être logé, comme illustré, dans un trou défini dans la pièce d'interface Plm concernée. Par ailleurs, chaque insert IC est destiné à découpler le cadre IC de la structure du véhicule. A titre d'exemple non limitatif, chaque insert IC peut, par exemple, être réalisé dans un matériau tel qu'un acier pour garantir la tenue des cales élastiques dans les pièces d'interface Plm, par emmanchement.

## Revendications

1. Dispositif de support (DS) pour supporter au moins une partie (PM) d'une machine électrique motrice d'un véhicule comprenant une structure, ledit dispositif de support (DS) comprenant un cadre (CD) destiné à être solidarisé fixement à ladite structure via M cales élastiques, avec M ≥ 3, et à supporter au moins ladite partie (PM) via N chapes de fixation (CFn), avec N ≥ 2, **caractérisé en ce qu'**il comprend en outre i) M pièces d'interface (Plm) solidarisées fixement audit cadre (CD) dans des positions respectives réglables en fonction de ladite structure et destinées à être couplées respectivement auxdites cales élastiques, et ii) N pièces d'ancrage (PAn) solidarisées fixement audit cadre (CD) et auxquelles sont solidarisées respectivement lesdites chapes de fixation (CFn) dans des positions respectives réglables en fonction de ladite partie (PM).

2. Dispositif selon la revendication 1, **caractérisé en ce qu'**au moins deux desdites pièces d'interface (Plm) sont solidarisées fixement audit cadre (CD) par vissage.

3. Dispositif selon la revendication 1 ou 2, **caractérisé en ce qu'**au moins deux desdites pièces d'interface (Plm) sont solidarisées fixement audit cadre (CD) par soudage.

4. Dispositif selon l'une des revendications 1 à 3, **caractérisé en ce que** chacune desdites pièces d'interface (Plm) comprend un insert (IC) auquel est propre à être couplée par emmanchement l'une desdites cales élastiques.

5. Dispositif selon l'une des revendications 1 à 4, **caractérisé en ce que** M est égal à quatre.

6. Dispositif selon la revendication 5, **caractérisé en ce que** deux desdites pièces d'interface (Plm) ont des positions réglables selon une direction transversale dudit véhicule, et deux autres desdites pièces d'interface (Plm) ont des positions réglables selon une direction longitudinale dudit véhicule et/ou ladite direction transversale du véhicule.

7. Dispositif selon l'une des revendications 1 à 6, **caractérisé en ce que** N est égal à trois.

8. Dispositif selon la revendication 7, **caractérisé en ce que** deux desdites chapes de fixation (CF1, CF2) ont des positions réglables par rapport à deux pièces d'ancrage (PA1, PA2) selon une direction transversale dudit véhicule, et une autre desdites chapes de fixation (CF3) a une position réglable par rapport à une autre pièce d'ancrage (PA3) selon une direction longitudinale dudit véhicule.

9. Véhicule comprenant une structure et une machine électrique motrice, **caractérisé en ce qu'**il comprend en outre un dispositif de support (DS) selon l'une des revendications précédentes, ce support (DS) étant solidarisé fixement à ladite structure et auquel est solidarisée fixement au moins une partie (PM) de ladite machine électrique motrice.

10. Véhicule selon la revendication 9, **caractérisé en ce qu'**il est de type automobile.

## Patentansprüche

1. Stützvorrichtung (DS) zum Stützen mindestens eines Teils (PM) einer Elektromotormaschine eines Fahrzeugs mit einer Struktur, wobei die Stützvorrichtung (DS) einen Rahmen (CD) umfasst, der dazu bestimmt ist, fest an der Struktur über M elastische Keile befestigt zu werden, mit M ≥ 3, und das mindestens den Teil (PM) über N Befestigungsbügel (CFn) trägt, mit N ≥ 2, **dadurch gekennzeichnet, dass** er ferner umfasst i) M Schnittstellenteile (PIm), die fest an dem Rahmen (CD) befestigt sind. in jeweiligen einstellbaren Positionen als Funktion der Struktur und dazu bestimmt, jeweils mit den elastischen Keilen gekoppelt zu werden, und ii) N Verankerungsstücke (PAn), die fest an dem Rahmen (CD) befestigt sind und an denen jeweils die Befestigungsbügel (CFn) befestigt sind. in jeweiligen einstellbaren Positionen gemäß dem Teil (PM).

2. Vorrichtung nach Anspruch 1, **dadurch gekennzeichnet, dass** mindestens zwei der Schnittstellenteile (PIm) fest an dem Rahmen (CD) durch Verschraubung befestigt sind.

3. Vorrichtung nach Anspruch 1 oder 2, **dadurch gekennzeichnet, dass** mindestens zwei der Schnittstellenteile (PIm) durch Schweißen fest an dem Rahmen (CD) befestigt sind.

4. Vorrichtung nach einem der Ansprüche 1 bis 3, **dadurch gekennzeichnet, dass** jeder der Schnittstellenteile (PIm) einen Einsatz (IC) umfasst, mit dem einer der elastischen Keile durch Aufstecken koppelbar ist.

5. Vorrichtung nach einem der Ansprüche 1 bis 4, **dadurch gekennzeichnet, dass** M gleich vier ist.

6. Vorrichtung nach Anspruch 5, **dadurch gekennzeichnet, dass** zwei der Schnittstellenteile (PIm) einstellbare Positionen in einer Querrichtung des Fahrzeugs haben und zwei andere der Schnittstellenteile (PIm) einstellbare Positionen in einer Längsrichtung des Fahrzeugs haben und/ oder die Querrichtung des Fahrzeugs.

7. Vorrichtung nach einem der Ansprüche 1 bis 6, **dadurch gekennzeichnet, dass** N gleich drei ist.

8. Vorrichtung nach Anspruch 7, **dadurch gekennzeichnet, dass** zwei der Befestigungsgabeln (CF1, CF2) einstellbare Positionen in Bezug auf zwei Verankerungsteile (PA1, PA2) in einer Querrichtung des Fahrzeugs haben und ein anderer der Befestigungsbügel (CF3) eine einstellbare Position relativ zu einem anderen Verankerungsteil (PA3) in einer Längsrichtung des Fahrzeugs hat.

9. Fahrzeug mit einer Struktur und einer elektrischen Antriebsmaschine, **dadurch gekennzeichnet, dass** es ferner eine Stützvorrichtung (DS) nach einem der vorangehenden Ansprüche umfasst, wobei diese Stütze (DS) fest an der Struktur befestigt ist und zumindest an dieser fest befestigt ist einen Teil (PM) der elektrischen Antriebsmaschine.

10. Fahrzeug nach Anspruch 9, **dadurch gekennzeichnet, dass** es vom Automobiltyp ist.

## Claims

1. Support device (DS) for supporting at least a part (PM) of an electric motor machine of a vehicle comprising a structure, said support device (DS) comprising a frame (CD) intended to be fixedly secured to said structure via M elastic wedges, with M ≥ 3, and in supporting at least said part (PM) via N fixing yokes (CFn), with N ≥ 2, **characterized in that** it further comprises i) M interface parts (Plm) fixedly secured to said frame (CD) in respective adjustable positions as a function of said structure and intended to be coupled respectively to said elastic wedges, and ii) N anchoring pieces (PAn) fixedly secured to said frame (CD) and to which are secured respectively said fixing yokes (CFn) in respective adjustable positions according to said part (PM).

2. Device according to claim 1, **characterized in that** at least two of the said interface parts (Plm) are fixedly secured to the said frame (CD) by screwing.

3. Device according to claim 1 or 2, **characterized in that** at least two of the said interface parts (Plm) are fixedly secured to the said frame (CD) by welding.

4. Device according to one of claims 1 to 3, **characterized in that** each of the said interface parts (Plm) comprises an insert (IC) to which one of the said elastic wedges is able to be coupled by fitting.

5. Device according to one of claims 1 to 4, **characterized in that** M is equal to four.

6. Device according to claim 5, **characterized in that** two of said interface parts (Plm) have adjustable positions in a transverse direction of said vehicle, and two others of said interface parts (Plm) have adjustable positions in a longitudinal direction of said vehicle and/or said transverse direction of the vehicle.

7. Device according to one of claims 1 to 6, **characterized in that** N is equal to three.

8. Device according to claim 7, **characterized in that** two of the said fixing clevises (CF1, CF2) have adjustable positions with respect to two anchoring parts (PA1, PA2) in a transverse direction of the said vehicle, and another of the said fixing (CF3) has an adjustable position relative to another anchoring part (PA3) in a longitudinal direction of said vehicle.

9. Vehicle comprising a structure and an electrical driving machine, **characterized in that** it further comprises a support device (DS) according to one of the preceding claims, this support (DS) being fixedly secured to the said structure and to which is fixedly secured at least a part (PM) of said driving electric machine.

10. Vehicle according to claim 9, **characterized in that** it is of the automobile type.
